# EUROPÄISCHE PATENTSCHRIFT

(11) **EP 1 125 717 B1**
(45) Veröffentlichungstag und Bekanntmachung des Hinweises auf die Patenterteilung: **20.11.2002**
(21) Anmeldenummer: 01101205.1
(22) Anmeldetag: 19.01.2001
(51) Int. Cl.: B29C 51/44, B65G 57/30

(54) **Verfahren zum Stapeln von Behältern aus thermoplastischem Kunststoff und Vorrichtung zur Durchführung des Verfahrens**
Method and device for piling containers made of thermoplastic material
Procédé et dispositif pour empiler des conteneurs en matière thermoplastique

(30) Priorität: 17.02.2000 DE 10007333
(43) Veröffentlichungstag der Anmeldung: 22.08.2001
(73) Patentinhaber: Illig, Adolf Maschinenbau GmbH & Co., 74081 Heilbronn (DE)
(72) Erfinder: Trautwein, Herbert, 71737 Kirchberg (DE); Eichbauer, Volker, 74223 Flein (DE); Wozny, Michael, 74076 Heilbronn (DE)

(56) Entgegenhaltungen:
- DE-A- 4 428 257
- DE-U- 7 330 214
- DE-U- 29 608 477
- US-A- 5 650 110

## Beschreibung

Die Erfindung betrifft ein Verfahren zum Stapeln von Behältern aus thermoplastischem Kunststoff mit den Merkmalen des Oberbegriffes des Patentanspruches 1. Sie betrifft femer eine Vorrichtung zur Durchführung des Verfahrens.

Es sind Vorrichtungen bekannt (Typen ÜG des Patentanmelders), bei denen aus dem um ca. 80° aus der Arbeitsstellung geschwenkten Formwerkzeug die Behälter direkt in Stapelrinnen ausgestoßen werden, die in Axialrichtung fluchtend zur Übemahmestellung angeordnet sind. Eine andere bekannte Vorrichtung des Patentanmelders, dargestellt in DE 198 52 359 A 1, ist es bekannt , die Behälter vor dem Einstapeln in die Stapelmagazine um 180° zu schwenken, um diese mit dem Boden voran in die bereits eingestapelten Behälter einzuführen. Ein anderes Beispiel einer derartigen Vorrichtung ist aus DE 296 08 477 U bekannt.

Bei bekannten Ausführungen bilden mehrere Stapelmagazine eine Stapelmagazinreihe und mehrere Stapelmagazinreihen einen gesamten Stapelkäfig - entsprechend der Nutzenanzahl im Formwerkzeug. Aus dem Stapelkäfig werden in bekannter Weise alle sich gebildeten Behälterstapel gleichzeitig über einen Ausschieberechen in eine Aufnahmekammer herausgeführt, wozu gegebenenfalls eine Verschiebung des gesamten Stapelkäfigs in Stapelrichtung zwischen zwei Takten erforderlich ist, um den Ausschieberechen in Ausschiebestellung bringen zu können. Bei hohen Taktzahlen und hohen Nutzenzahlen, die einen großen und schweren Stapelkäfig bedingen, führt das Verschieben des gesamten Stapelkäfigs, das Einschwenken des Ausschieberechens und das Zurückfahren des Stapelkäfigs in Stapelstellung zwischen zwei Takten zu zeitlichen Problemen und beschränkt die Taktzahl der Vorrichtung. Das erforderliche schnelle Räumen des Stapelkäfigs führt zum Zusammendrücken der Behälterstapel, was eine Entformung bei der Vereinzelung der Behälter, z. B. in Füllautomaten und Getränkeautomaten, erschwert und zu Störungen führt. Die schnelle Verschiebung des Stapelkäfigs bedingt hohe Massenkräfte und erfordert entsprechend groß dimensionierte Antriebe mit genauen Haltepunkten, um die Endstellung des Stapelkäfigs lagegenau anzufahren. Diese Antriebe sind teuer.

Wenn die stapelweise aus den Stapelmagazinen ausgeschobenen Behälter weiterverarbeitet werden, z. B. durch Bördeln, Bedrucken, stangenweises Verpacken in Kartons, ist es erforderlich, zunächst alle Behälterstapel in eine Reihe hintereinander zu überführen. Bei den bekannten Vorrichtungen werden dazu nach dem gemeinsamen Räumen aller Behälterstapel diese in eine formatabhängige Aufnahmekammer überführt, in der über Schieber die einzelnen Behälterstapel reihenweise auf ein quer verlaufendes Förderband übergeben werden, das taktweise die einzelnen Behälterstapel auf ein in Stapelrichtung verlaufendes Förderband übergibt. Dieses Überführen ist störungsanfällig bezüglich des Auseinanderdriftens der Behälterstapel je nach Gestalt der Behälter (Konizität, Durchmesser, Höhe). Die Aufnahmekammer ist formatabhängig und muss bei der Umstellung der Vorrichtung entweder als Ganzes getauscht oder auf aufwendige Weise auf ein neues Behälterformat umgestellt werden, wozu sie einstellbar gestaltet sein muss.

Der Erfindung liegt die Aufgabe zugrunde, das Verfahren so auszubilden, dass es eine hohe Taktzahl der Vorrichtung ohne rasche und lagegenaue Verschiebung des gesamten Stapelkäfigs zwischen zwei Takten der vorgeschalteten Formmaschine ermöglicht. Die Störungsanfälligkeit der Vorrichtung, bedingt durch die Handhabung der einzelnen Behälterstapel, sollte reduziert werden. Das Verfahren sollte einfache Formatteile bedingen und einen schnellen Formatwechsel bei der Umstellung der Vorrichtung auf ein anderes Behälterformat ermöglichen. Eine Aufnahmekammer zur Aufnahme aller ausgestoßenen Behälterstapel vor ihrem Hintereinanderführen sollte nicht erforderlich sein.

Gelöst ist diese Aufgabe durch die im Kennzeichen des Hauptanspruches angegebenen Maßnahmen. Die Unteransprüche stellen vorteilhafte Weiterbildungen dar. Die Vorrichtung ist gekennzeichnet durch die Merkmale des Anspruches 9. Das Verfahren ist anhand der schematischen Zeichnungen der Vorrichtung näher beschrieben. Es zeigen:

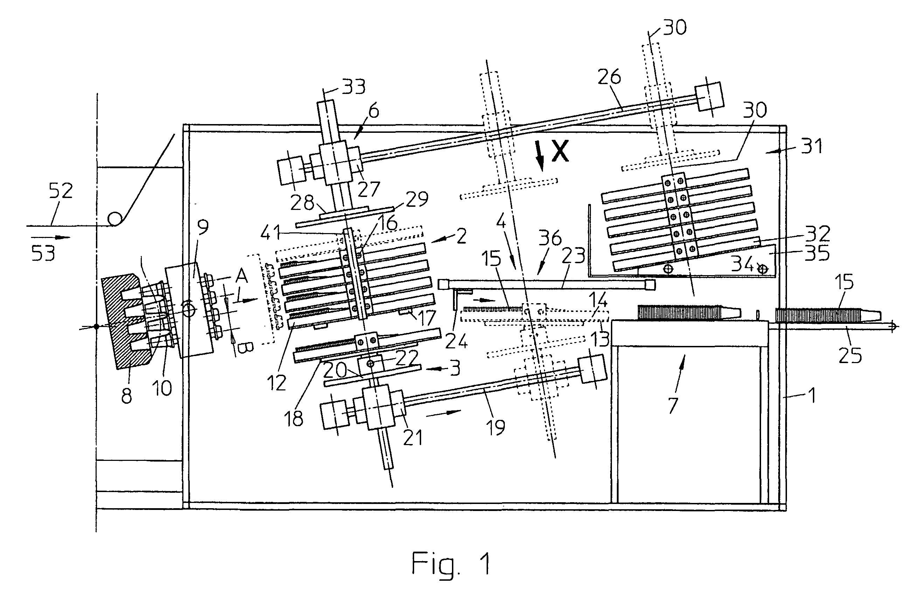

- Figur 1: eine Seitenansicht der Vorrichtung
- Figur 2: eine Draufsicht auf die Vorrichtung in Richtung X
- Figur 3: einen Schnitt durch einen Teilbereich der Stapelstation
- Figur 4: eine Variante der Vorrichtung - Seitenansicht
- Figur 5: eine weitere Variante der Vorrichtung in Seitenansicht und
- Figur 6: in Draufsicht in Richtung Y

Die Vorrichtung zur Durchführung des Verfahrens besteht aus einem Gestell 1 zur Aufnahme eines Stapelkäfigs 2, einer Verschiebeeinrichtung 3, einer Räumeinrichtung 4, einer Überführungseinrichtung 6 und einem Querausschub 7. Sie steht nachgeschaltet an einen Thermoformautomaten, in dem Behälter 10 aus thermoplastischem Kunststoff aus einer taktweise in Pfeilrichtung 53 transportierten erwärmten Folienbahn 52 tiefgezogen, ausgestanzt und aus dem geöffneten und geschwenkten Formwerkzeug 8 ausgestoßen werden. Dargestellt ist ein vierreihiges Formwerkzeug 8 mit sechs Kavitäten pro Reihe.

Das Ausstoßen der Behälter 10 erfolgt entweder direkt in entsprechend vor dem geschwenkten Formwerkzeug 8 angeordnete Stapelmagazine oder wie dargestellt auf eine Behälterübergabe 9, die die Behälter 10 nutzenweise aufnimmt, um 180° schwenkt und in die sich in der Stapelstation 33 angeordneten Stapelmagazine 11 überführt. Mehrere Stapelmagazine 11 bilden eine Stapelmagazinreihe 12, alle Stapelmagazinreihen 12 bilden den Stapelkäfig 2.

Jedes Stapelmagazin 11 besteht aus einem Boden 13 und Seitenteilen 14, so dass jeder Behälterstapel 15 ausreichend abgestützt und gehalten ist. Alle Stapelmagazine 11 einer Stapelmagazinreihe 12 sind über eine Platte 5 verbunden. Seitlich auf der Platte 5 sitzen Distanzen 40, an diesen Laufrollen 16, die mit ortsfesten Führungen 41 in Wirkverbindung stehen. Auf diese Weise können die Stapelmagazinreihen 12 einzeln und gemeinsam an den Führungen 41 senkrecht zur Stapelrichtung A verschoben werden.

Über Zentrierstifte 37 in den Distanzen 40 und entsprechende Zentrierbohrungen 38 auf der Unterseite der Distanzen 40 werden die einzelnen Stapelmagazinreihen 12 zueinander zentriert. Zurückgehalten wird die unterste Stapelmagazinreihe 12 von Anschlägen 17, die seitlich verschoben werden können, so dass die unterste Stapelmagazinreihe 12 frei wird. Sie wird von einem höhenverschiebbaren Tisch 18 aufgenommen, indem im Tisch 18 Stifte 39 angeordnet sind, die auf die Zentrierbohrungen 38 treffen. Der Tisch 18 gehört zur Verschiebeeinrichtung 3. Diese setzt sich femer aus einem Schlitten 21, der auf ortsfesten Führungen 19 im in Stapelrichtung A oder horizontal verschiebbar ist und einer Konsole 20 zusammen. Dabei ist die Konsole 20 verschiebbar im Schlitten 21 geführt und trägt den Tisch 18. Dieser ist im Drehpunkt 22 an der Konsole 20 schwenkbar gehalten. Nicht dargestellte Antriebe sind vorgesehen zur Verschiebung der Konsole 20 relativ zum Schlitten 21, zur Verschiebung des Schlitten 21 auf den Führungen 19 und zum Kippen des Tisches 18 im Drehpunkt 22.

Es kann aus Nachbearbeitungsgründen vorteilhaft sein, die Becherstapel 15 vor dem Ausschieben aus den Stapelmagazinreihen 12 um 180° zu drehen, sodass sie z. B. mit der Öffnung voran auf den Querausschub 7 übergeben werden. Zu diesem Zweck wird in Weiterbildung der Erfindung vorgeschlagen, den Tisch 18 mit einer um 180° drehbaren, nicht dargestellten Schwenkeinrichtung zu versehen. Diese führt vor dem Ausschieben der Behälterstapel 15 diese Schwenkbewegung durch und dreht nach dem Ausschieben wieder in Ausgangslage.

Die Räumeinrichtung 4 besteht aus einem Antrieb 23, der den Rechen 24 horizontal verschiebt. Dabei ist der Rechen 24 so gestaltet, dass er die in einer Stapelmagazinreihe 12 liegenden Behälterstapel 15 auf den quer verschiebbaren Querausschub 7, z. B. in Form eines Förderbandes, überführen kann, der die einzelnen Behälterstapel 15 dann in bekannter Weise - alle hintereinander liegend - auf ein Längsförderband 25 übergibt.

Oberhalb des Stapelkäfigs 2 ist die Überführungseinrichtung 6 angeordnet, bestehend aus ortsfesten Längsführungen 26, einem daran geführten Schlitten 27 und einer zum Schlitten 27 verschiebbaren, auf diesem angeordneten Konsole 28, die eine Halteplatte 29 trägt. Die Halteplatte 29 weist Halteeinrichtungen, z. B. in Form einer Verrastungseinrichtung auf, so dass sie eine Stapelmagazinreihe 12 festhalten und über entsprechende nicht dargestellte Antriebe auf die oberste Stapelmagazinreihe 12 des Stapelkäfigs 2 in der Stapelstation 33 auflegen kann.

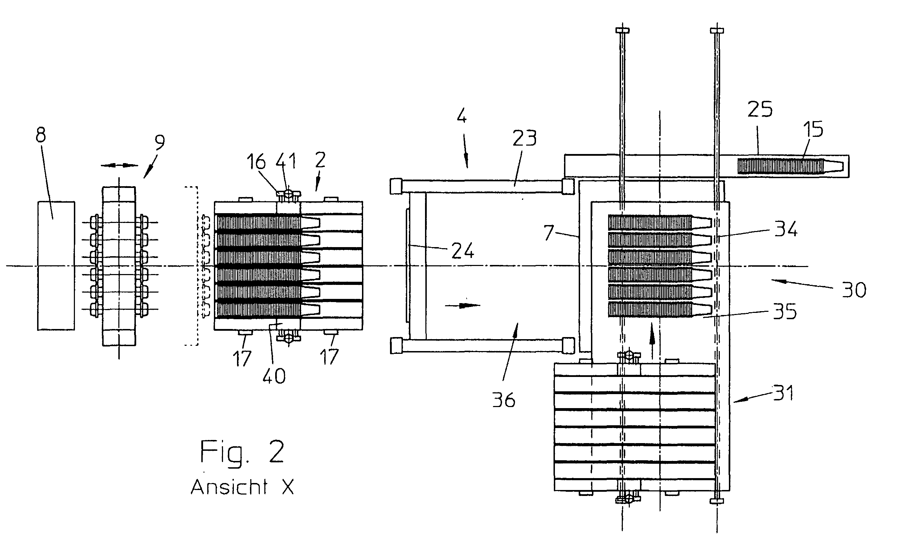

In Weiterbildung der Erfindung wird vorgeschlagen, oberhalb des Querausschubes 7 eine Umrüststation 30 vorzusehen, die einen ganzen Stapelkäfig 31, also mehrere aufeinander sitzende Stapelmagazinreihen 32, aufnehmen kann. Die Überführungseinrichtung 26 ist in diesem Fall bezüglich ihrer Verschiebbarkeit so ausgebildet, dass sie die Stapelmagazinreihen 12, 32 einzeln in der Umrüststation 30 aufnehmen und in die Stapelstation 33 überführen kann - und umgekehrt. Es ist also beim Umrüsten der Formmaschine auf einen anderen Behälter 10 mit anderer Geometrie möglich, die sich in der Stapelstation 33 befindlichen, formatabhängigen Stapelmagazinreihen 12 mittels der Überführungseinrichtung 6 aufzunehmen und einzeln in die Umrüststation 30 zu überführen. Aus dieser werden sie satzweise entnommen. Der neue Satz Stapelmagazinreihen 32 wird eingesetzt und diese werden einzeln in die Stapelstation 33 überführt. Vorzugsweise wird man in der Umrüststation 30 eine an Führungen 34 quer verschiebbare Aufnahmeplatte 35 mit doppelter Breite der Stapelmagazinreihen 12, 32 anordnen, sodass es möglich ist, nach dem Entladen der Stapelstation 33 die bereits auf der Aufnahmeplatte 35 bereitgehaltenen Stapelmagazinreihen 32 durch Querverschiebung auf den Führungen 34 so zu verschieben, dass ein Aufnehmen und Überführen durch die Übergabeeinrichtung 6 erfolgen kann. Dies bietet den Vorteil, dass man bereits während der Produktion von Behältern 10 die Stapelmagazinreihen 32 für die Umrüstung bereitstellen kann (siehe Fig. 2) und dann der Austausch der Stapelmagazinreihen 11, 32 kontinuierlich und automatisch - Entladen - Verschieben - Beladen - erfolgen kann. Dies kann also in kürzest möglicher Zeit ohne manuellen Eingriff und ohne Unfallgefahr hinter geschlossenen Schutzverkleidungen erfolgen.

Das Verfahren läuft wie nachfolgend beschrieben ab: Beim Produktionsstart sind in der Stapelstation 33 Stapelmagazinreihen 12 angeordnet und zwar von der Anzahl her mindestens eine Stapelmagazinreihe 12 mehr als das Formwerkzeug 8 Behälterreihen aufweist. Diese überzählige Stapelmagazinreihe 12 sitzt an oberster Stelle. Es werden Behälter 10 in die unteren Stapelmagazinreihen 12 eingestapelt, die oberste Stapelmagazinreihe 12 bleibt leer.

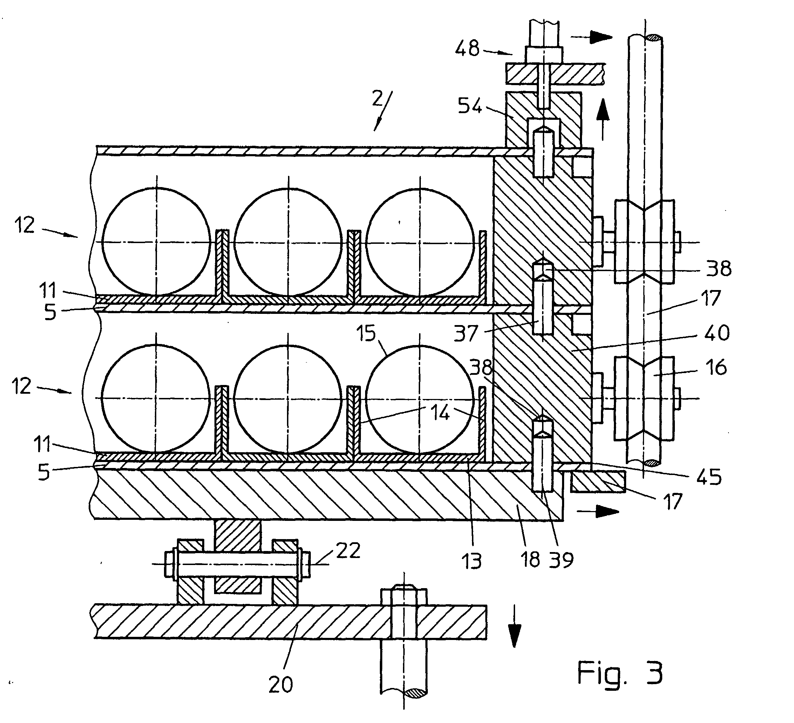

Nach einer bestimmten vorgegebenen Taktzahl fahren alle Stapelmagazinreihen 12 in der Stapelstation 33, also das ganze Stapelkäfig 2, um einen Reihenabstand B nach unten, und zwar zwischen zwei Takten der vorgeschalteten Formmaschine . Danach werden also Behälter 10 auch in die oberste Stapelmagazinreihe 12 eingestapelt, die unterste Stapelmagazinreihe 12 wird nicht mehr beschickt. Dies wird dadurch erreicht, dass der Tisch 18 die unterste Stapelmagazinreihe 12 abstützt und zentriert (Lage siehe Figur 3), der Anschlag 17 zurückgezogen, der Tisch 18 um den Abstand B verschoben und der Anschlag 17 wieder eingefahren wird. Der Tisch 18 wird weiter abgesenkt und von der Verschiebeeinrichtung 3 in die Stapelentnahmestation 36 geführt und geschwenkt, so dass der Rechen 24 die Behälterstapel 15 auf den Querausschub 7 übergeben kann. Der Tisch 18 wird wieder in Schräglage gekippt und die Halteplatte 29 der Übergabeeinrichtung 6 ergreift die auf ihm liegende Stapelmagazinreihe 12, hebt sie ab und überführt sie auf die oberste Stapelmagazinreihe 12 in der Stapelstation 33. Der Tisch 18 wird gleichzeitig wieder in die Stapelstation 33 gebracht und stützt die unterste Stapelmagazinreihe 12 ab, so dass jetzt diese nach einer vorgegebenen und einstellbaren Taktzahl abgeholt und in die Stapelentnahmestation 36 überführt werden kann.

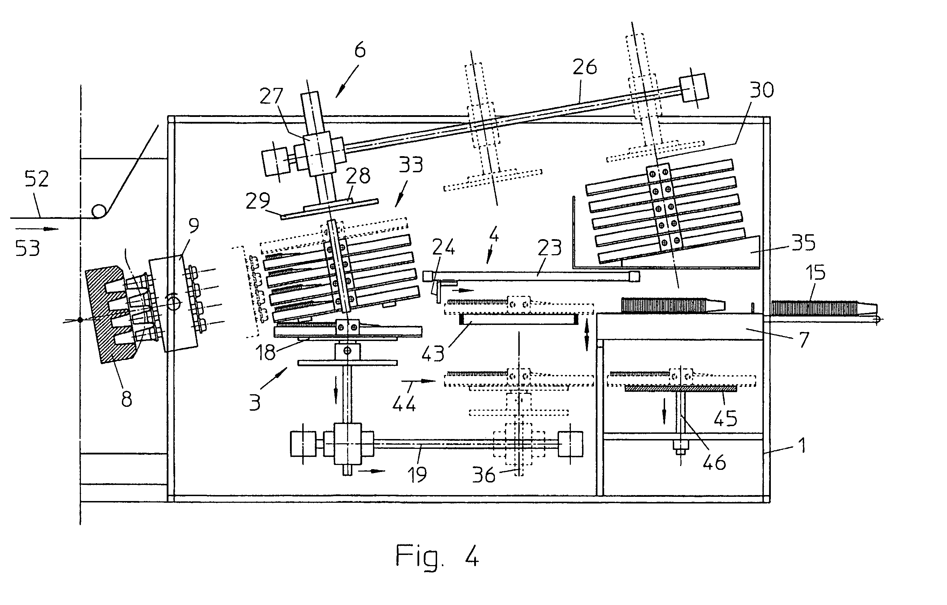

Eine vorteilhafte Variante des Verfahrens und die Vorrichtung hierfür ist in Figur 4 dargestellt. Diese Variante bietet Vorteile bei einer hohen Taktzahl der Vorrichtung und dann, wenn in den Stapelmagazinen 11 relativ wenige Behälter Platz haben - sei es aufgrund des Stapelabstandes des Behälters oder aufgrund von relativ kurzen

Stapelmagazinen 11, die dann eine kurze Bauform der Vorrichtung als Ganzes ermöglichen.

In diesem Fall muss man vor allem bei drei oder vier Behälterreihen im Formwerkzeug 8 relativ oft eine Verschiebung der Stapelmagazinreihen 12 vornehmen. Beispiel: Wenn jedes Stapelmagazin 11 vierzig Behälter 10 aufnehmen kann, muss bei einem vierreihigem Formwerkzeug 8 nach 10 Takten eine Verschiebung der Stapelmagazinreihen 12 erfolgen. Jedes Stapelmagazin 11 nimmt dann in jeder Position 10 Behälter auf, also insgesamt 40 Stück. Wenn die Vorrichtung mit 30 Takten pro Minute betrieben wird, bedeutet das, dass 20 Sekunden Zeit bleiben für das Entfernen der untersten Stapelmagazinreihe 12, ihrem Kippen, Überführen, ggf. Schwenken, Entladen, ggf. Zurückschwenken, Kippen, Übernehmen und Überführen auf die oberste Stapelmagazinreihe 12 in der Stapelstation 33. Man könnte dies zwar dadurch zeitlich besser in den Griff bekommen, indem man zwei Stapelmagazinreihen 12 mehr als Behälterreihen im Formwerkzeug einsetzt. Man muss dann in den 20 Sekunden Zeit aber immer noch den Tisch 18 abwärts fahren, kippen, überführen in die Stapelentnahmestation 36, ggf. schwenken um 180°, die Behälterstapel 15 räumen, den Tisch 18 kippen, ggf. zurückschwenken um 180 °, zurückführen und anheben.

Diese zeitlichen Probleme vermeidet die Lösung gemäß der Figur 4. Es wird vorgeschlagen, in der Stapelentnahmestation 36 eine Hubeinrichtung 43 anzuordnen, die jede Stapelmagazinreihe 12 vom in horizontaler Lage stehenden Tisch 18 abhebt und bereithält zum Räumen. Sowie die Stapelmagazinreihe 12 vom Tisch 18 abgehoben ist, kann der Tisch 18 zurückfahren in die Stapelstation 33 und die nächste Stapelmagazinreihe 12 aufnehmen. Die Überführungseinrichtung 6 nimmt dann die Stapelmagazinreihe 12 von der Hubeinrichtung 43 auf und legt sie auf die oberste Stapelmagazinreihe 12 in der Stapelstation 33.

In Figur 4 ist zusätzlich eine Variante des Wechselns aller Stapelmagazinreihen 12 bei einer Umrüstung der Vorrichtung dargestellt. In der Stapelentnahmestation 36 ist ein Querausschub angeordnet, der durch den Pfeil 44 dargestellt ist. Er schiebt bei einer Umsetzung die sich auf dem Tisch 18 befindlichen Stapelmagazinreihen 12 horizontal auf einen Tisch 45, der vertikal verschiebbar unterhalb des Querausschubes 7 in der

Umrüststation 46 angeordnet ist. Auf diese Weise werden alle Stapelmagazinreihen 12 auf dem Tisch 45 aufeinander abgelegt, gleichzeitig werden die neuen Stapelmagazinreihen 32 einzeln von der Übergabeeinrichtung 6 aus der Umrüststation 30 entnommen und in die Stapelstation 33 überführt, so dass also der Wechsel der Stapelmagazinreihen 12, 32 gleichzeitig erfolgt.

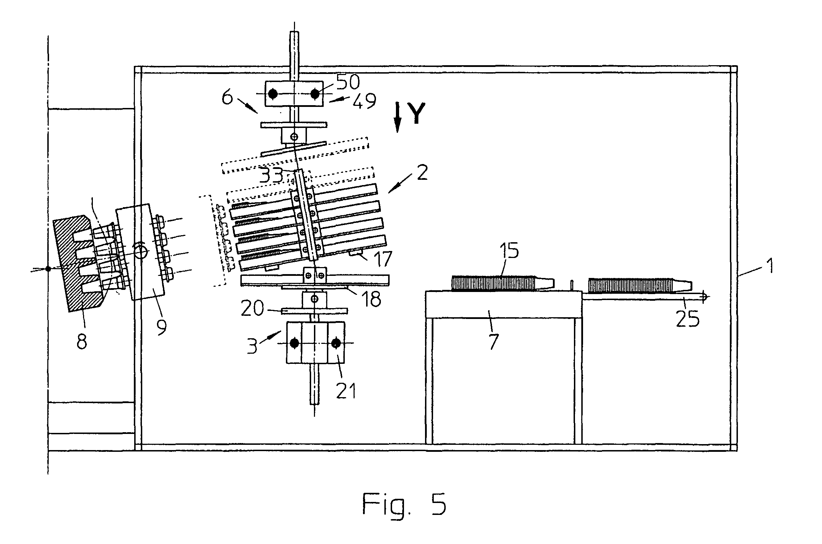

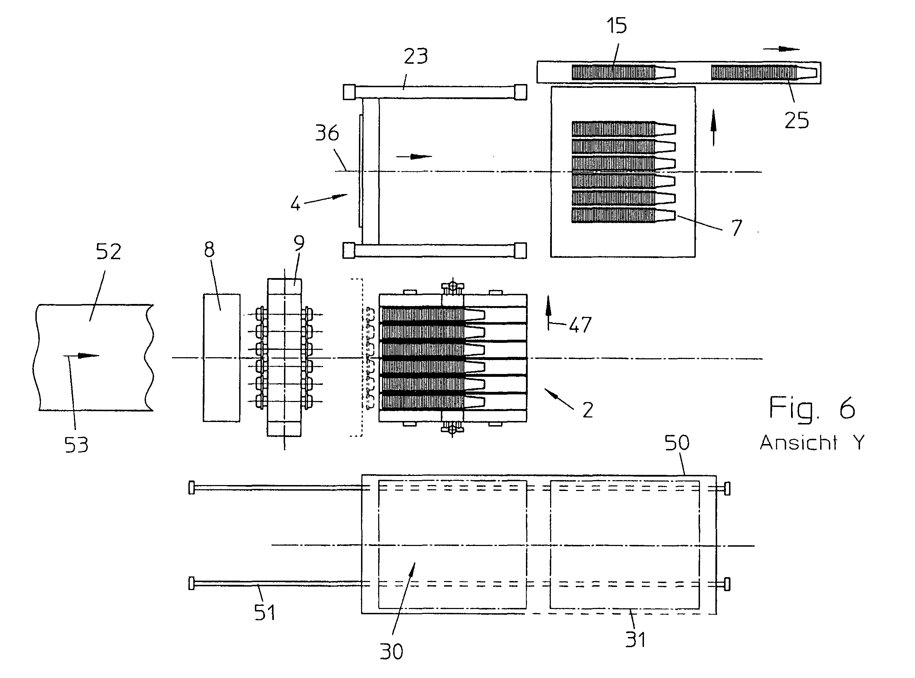

Die Figuren 5 und 6 zeigen Seitenansicht und Draufsicht (Richtung Y) einer anderen Gestaltung der Vorrichtung zur Durchführung des Verfahrens. Der Stapelkäfig 2 mit Stapelmagazinreihen 12 ist in gleicher Weise angeordnet. Der Tisch 18 ist vertikal verschiebbar gestaltet und die Aufnahme der untersten Stapelmagazinreihe 12 erfolgt in der Weise, dass sich diese nach dem Rückzug der Anschläge 17 durch Schwerkraft absenkt und von allein in horizontale Lage auf dem Tisch 18 begibt, wenn die darüber angeordneten Stapelmagazinreihen 12 entsprechend zurückgehalten werden. Nach dem vertikalen Absenken des Tisches 18 fährt er horizontal nach hinten - also quer zur Vorschubrichtung der in der Formmaschine verarbeiteten Folienbahn 52 - in Richtung des Pfeiles 47 (siehe Figur 6) bis zu der Stapelentnahmestation 36, in der die Behälterstapel 15 von der dort angeordneten Räumeinrichtung 4 auf den Querausschub 7 übergeben werden, der die Behälterstapel 15 dann wieder auf das Längsförderband 25 übergibt. Das Überführen der geleerten Stapelmagazinreihen 12 erfolgt durch die Überführungseinrichtung 49, die höhenverschiebbare und an Führungen 50 horizontal verschiebbare und in Schräglage kippbare Greifeinrichtungen aufweist.

Auch bei dieser Bauweise der Vorrichtung ist eine Anordnung einer Schwenkeinrichtung auf dem Tisch 18 zum Schwenken der Stapelmagazinreihen 12 um 180° optional möglich. Bei dieser Gestaltung der Vorrichtung ist eine vorgesehene Umrüststation 30 auf der Vorderseite der Vorrichtung angeordnet und kann ebenfalls mit einer an Führungen 51 verschiebbaren Konsole 50 mit doppelter Breite der Stapelkäfige 2, 31 versehen sein. Das Umrüsten der Vorrichtung kann dann in der beschriebenen vorteilhaften Weise analog vorgenommen werden. Auch bei einer so gestalteten Vorrichtung ist es möglich, in der Stapelentnahmestation 36 eine Hubeinrichtung analog der Hubeinrichtung 43 anzuordnen und diese zur Aufnahme der Stapelmagazinreihen 12 einzusetzen.

Es hat sich als vorteilhaft erwiesen, die in der Stapelstation 33 angeordneten Stapelmagazinreihen 12 während des Einstapelns von Behältern 10 durch eine Anpresseinrichtung 48 gegen die Anschläge 17 zu drücken, sodass diese Stapelmagazinreihen 12 eine genau definierte Lage ohne Zwischenräume aufweisen, was die Störungsanfälligkeit des Stapelns positiv beeinflusst. Vor dem Auflegen einer geleerten Stapelmagazinreihe 12 wird die Anpressung gelöst und die Anpresseinrichtung 48 seitlich verschoben bzw. außer Eingriff gebracht, sodass das Auflegen der leeren Stapelmagazinreihe 12 nicht behindert ist und nach dem Auflegen wieder in Eingriff gebracht. Eine solche Anpresseinrichtung 48 ist in Figur 3 auf die Oberseite der obersten Stapelmagazinreihe 12 wirkend angedeutet. Sie ist drehbar an den Führungen 41 gehalten und mit einem verschiebbaren Anpressteil 54 ausgerüstet.

## Patentansprüche

1. Verfahren zum Stapeln von Behältern (10) aus thermoplastischem Kunststoff, die aus einer Folienbahn (52) geformt, ausgestanzt und aus dem Formwerkzeug (8) in Stapelmagazine (11) überführt und aus diesen als Behälterstapel (15) entnommen und weiterverarbeitet werden, **gekennzeichnet durch** folgende Verfahrensschritte:
a) Verwendung von Stapelmagazinreihen (12), bestehend aus einzelnen, miteinander verbundenen Stapelmagazinen (11), wobei mindestens eine Stapelmagazinreihe (12) mehr vorgesehen ist als die Anzahl von Behälterreihen im Formwerkzeug (8) der vorgeschalteten Formmaschine;
b) Einstapeln von Behältern (10) in die in der Stapelstation (33) stehenden Stapelmagazine (11);
c) gemeinsames Verschieben aller in der Stapelstation (33) stehenden Stapelmagazinreihen (12) senkrecht zur Stapelrichtung (A) um den Abstand (B) zwischen zwei Stapelmagazinreihen (12);
d) Überführen der in Verschieberichtung vordersten Stapelmagazinreihe (12) zu einer seitlich der Stapelstation (33) angeordneten Stapelentnahmestation (36);
e) Entleeren der in der Stapelentnahmestation (36) befindlichen Stapelmagazinreihe (12);
f) Überführen der in der Stapelentnahmestation (36) befindlichen Stapelmagazinreihe (12) **durch** eine Überführungseinrichtung (6) auf die in Verschieberichtung hinterste der in der Stapelstation (33) stehenden Stapelmagazinreihe (12).

2. Verfahren nach Anspruch 1, **dadurch gekennzeichnet, dass** die Stapelmagazinreihen (12) in der Stapelentnahmestation (36) von einer Hubeinrichtung (43) übernommen und während des Entleerens von dieser gehalten werden.

3. Verfahren nach Anspruch 1 oder 2, **dadurch gekennzeichnet, dass** die Stapelmagazinreihen (12) vor dem Entleeren um 180° gedreht werden.

4. Verfahren nach einem der Ansprüche 1 bis 3, **dadurch gekennzeichnet, dass** die in der Stapelstation (33) angeordneten Stapelmagazinreihen (12) während des Stapelns von Behältern (10) von einer Anpresseinrichtung (48) gegen Anschläge (17) gedrückt werden.

5. Verfahren nach einem der Ansprüche 1 bis 4, **dadurch gekennzeichnet , dass** bei in der Stapelstation (33) zur Horizontalen geneigt angeordneten Stapelmagazinreihen (12) diese vor dem Entleeren in der Stapelentnahmestation (36) in horizontale Lage geschwenkt und vor dem Aufsetzen auf die sich in der Stapelstation (33) befindliche oberste Stapelmagazinreihe (12) wieder in geneigte Lage geschwenkt werden.

6. Verfahren nach einem der Ansprüche 1 bis 5, **dadurch gekennzeichnet, dass** nach beendeter Fertigung von Behältern (10) einer bestimmten Gestalt zum Umrüsten auf ein anderes Behälterformat alle Stapelmagazinreihen (12) einzeln aus der Stapelstation (33) in eine Umrüststation (30) bzw. Ausrüststation (46) überführt und anschließend neue, in die Umrüststation (30) gebrachte Stapelmagazinreihen (32), einzeln in die Stapelstation (33) überführt und aufeinander gesetzt werden.

7. Verfahren nach Anspruch 6, **dadurch gekennzeichnet, dass** nach dem Umsetzen der ausgerüsteten Stapelmagazinreihen (12) in die Umrüststation (30) der entstehende ganze Stapelkäfig (2) seitlich verschoben und gleichzeitig ein neuer Stapelkäfig (31) mit den einzurüstenden Stapelmagazinreihen (32) in die Umrüststation (30) geführt wird.

8. Verfahren nach Anspruch 6, **dadurch gekennzeichnet, dass** während des Überführens der jeweils untersten, in der Stapelstation (33) angeordneten Stapelmagazinreihe (12) in eine Ausrüststation (46) das Aufsetzen der neuen Stapelmagazinreihen (32) auf die oberste Stapelmagazinreihe (12,32) in der Stapelstation (33) erfolgt.

9. Vorrichtung zum Stapeln von Behältern (10) aus thermoplastischem Kunststoff zum Nachschalten an eine Formmaschine, bestehend aus Stapelmagazinreihen (12) mit einzelnen Stapelmagazinen (11), in die die Behälter (10) eingestapelt werden, mit einer Einrichtung zum Herausführen der Behälterstapel (15) aus den Stapelmagazinen (11), **gekennzeichnet durch** folgende Merkmale:
a) Alle Stapelmagazine (11) einer Reihe sind verbunden zu einer Stapelmagazinreihe (12);
b) die Stapelmagazinreihen (12) sind aufeinandersetzbar und voneinander trennbar sowie senkrecht zur Stapelrichtung (A) verschiebbar gestaltet;
c) eine Verschiebeeinrichtung (3) zum Überführen der jeweils untersten Stapelmagazinreihe (12) aus der Stapelstation (33) in eine seitlich dazu angeordnete Stapelentnahmestation (36), die einen verschiebbaren Rechen (24) zum Herausführen der Behälterstapel (15) aufweist;
d) eine Überführungseinrichtung (6) zum Überführen der entleerten Stapelmagazinreihen (12) aus der Stapelentnahmestation (36) auf die in Verschieberichtung der Stapelmagazinreihen (12) hinterste Stapelmagazinreihe (12) in der Stapelstation (33).

10. Vorrichtung nach Anspruch 9, **dadurch gekennzeichnet, dass** jede Stapelmagazinreihe (12) Zentriereinrichtungen (37,38) zur Zentrierung mit benachbarten Stapelmagazinreihen (12) aufweist.

11. Vorrichtung nach Anspruch 10, **dadurch gekennzeichnet, dass** die Zentriereinrichtung aus Zentrierstiften (37) und Zentrierbohrungen (38) besteht.

12. Vorrichtung nach einem der Ansprüche 9 bis 11, **dadurch gekennzeichnet, dass** zur Verschiebung der Stapelmagazinreihen (12) quer zur Stapelrichtung (A) Führungsrollen (16) an jeder Stapelmagazinreihe (12) angeordnet sind, die mit ortsfesten Führungen (41) zusammenwirken.

13. Vorrichtung nach einem der Ansprüche 9 bis 12, **dadurch gekennzeichnet, dass** die Verschiebeeinrichtung (3) aus einem verschiebbaren Tisch (18) zur Aufnahme der untersten Stapelmagazinreihen (12) besteht, der an einer in Stapelrichtung verschiebbaren Konsole (21) gehalten und zu dieser verschiebbar ausgebildet ist.

14. Vorrichtung nach Anspruch 13, **gekennzeichnet durch** eine in der Stapelentnahmestation (36) angeordnete Hubeinrichtung (44) zur Aufnahme der Stapelmagazinreihen (12) vom Tisch (18).

15. Vorrichtung nach einem der Ansprüche 9 - 14, **dadurch gekennzeichnet, dass** die Überführungseinrichtung (6) aus einer senkrecht zur Stapelrichtung (A) verschiebbaren Halteplatte (29) mit Greifeinrichtungen besteht, die an einem in Stapelrichtung (A) verschiebbaren Schlitten (27) gehalten und geführt ist.

16. Vorrichtung nach einem der Ansprüche 9 bis 15, **dadurch gekennzeichnet, dass** sie eine Umrüststation (30) zur Aufnahme eines Stapelkäfigs (2, 31) aufweist und die Überführungseinrichtung (6) soweit verschiebbar ausgebildet ist, dass die Stapelmagazinreihen (12,32) einzeln aus der Stapelstation (33) entnommen und in der Umrüststation (30) abgelegt werden können und umgekehrt.

17. Vorrichtung nach Anspruch 16, **dadurch gekennzeichnet, dass** in der Umrüststation (30) eine verschiebbare Aufnahmeplatte (35) zur Aufnahme von zwei nebeneinander stehenden Stapelkäfigen (2, 31) angeordnet ist.

18. Vorrichtung nach einem der Ansprüche 9 bis 15, **dadurch gekennzeichnet, dass** sie eine Umrüststation (30) zur Aufnahme eines Stapelkäfigs (31) aufweist und die Überführungseinrichtung (6) soweit verschiebbar ausgebildet ist, dass die Stapelmagazinreihen (32) einzeln aus der Umrüststation (30) entnommen und in der Stapelstation (33) abgelegt werden können und dass sie zudem eine Ausrüststation (46) mit einem höhenverschiebbaren Tisch (45) aufweist, auf den die ausgerüsteten Stapelmagazinreihen (12) über eine Querausschub (44) geschoben werden.

19. Vorrichtung nach einem der Ansprüche 9 bis 18, **gekennzeichnet durch** eine Anpresseinrichtung (48) zum Drücken der in der Stapelstation (33) angeordneten Stapelmagazinreihen (12) gegen Anschläge (17).

## Claims

1. Method of stacking containers (10) of thermoplastic synthetic material, which are formed from a foil web (52), punched out and transferred from the mould tool (8) to stack magazines (11) and removed from these as container stacks (15) and further processed, **characterised by** the following method steps:
a) use of stack magazine rows (12) consisting of individual, interconnected stack magazines (11), wherein at least one stack magazine row (12) more is provided than the number of container rows in the mould tool (8) of the upstream moulding machine;
b) stacking of containers (10) into the stack magazines (11) standing in the stacking station (33);
c) displacement in common of all stack magazine rows (12), which are standing in the stacking station (33), perpendicularly to the stacking direction (A) by the spacing (B) between two stack magazine rows (12);
d) transfer of the stack magazine row (12), which is foremost in the direction of displacement, to a stack removing station (36) arranged laterally of the stacking station (33);
e) emptying of the stack magazine row (12) disposed in the stack removing station (36); and
f) transfer of the stack magazine row (12), which is disposed in the stack removing station (36), by a transfer device (6) to the stack magazine row (12) which is rearmost, in the direction of displacement, in the stacking station (33).

2. Method according to claim 1, **characterised in that** the stack magazine rows (12) in the stack removing station (36) are taken over by a lifting device (43) and are held by this during emptying.

3. Method according to claim 1 or 2, **characterised in that** the stack magazine rows (12) are turned through 180° before emptying.

4. Method according to one of claims 1 to 3, **characterised in that** the stack magazine rows (12) arranged in the stacking station (33) are pressed by a pressing device (48) against abutments (17) during stacking of containers (10).

5. Method according to one of claims 1 to 4, **characterised in that** in the case of stack magazine rows (12) arranged in the stacking station (33) at an inclination to the horizontal these rows are swung into horizontal position before emptying in the stack removing station (36) and are swung back into inclined position before placing on the uppermost stack magazine row (12) disposed in the stacking station (33).

6. Method according to one of claims 1 to 5, **characterised in that** for re-equipping to a different container format after conclusion of production of containers (10) of a specific shape all stack magazine rows (12) are transferred individually from the stacking station (33) to a re-equipping station (30) or an equipping station (46) and subsequently new stack magazine rows (32) brought into the re-equipping station (30) are individually transferred to the stacking station (33) and placed on one another.

7. Method according to claim 6, **characterised in that** after conversion of the equipped stack magazine rows (12) in the re-equipping station (30) the arising entire stack cage (2) is laterally displaced and simultaneously a new stack cage (31) with the stack magazine rows (32) to be set up is transferred to the re-equipping station (30).

8. Method according to claim 6, **characterised in that** during the transfer of the respective lowermost stack magazine row (12), which is arranged in the stacking station (33), to an equipping station (46) the placing of the new stack magazine rows (32) on the uppermost stack magazine row (12, 32) in the stacking station (33) is carried out.

9. Device for stacking containers (10) of thermoplastic synthetic material and for connection downstream of a moulding machine, consisting of stack magazine rows (12) with individual stack magazines (11) into which the containers (10) are stacked, with a device for taking the container stacks (15) out of the stack magazines (11), **characterised by** the following features:
a) all stack magazines (11) of a row are connected into a stack magazine row (12);
b) the stack magazine rows (12) are designed to be placeable on and separable from one another and displaceable perpendicularly relative to the stack direction (A);
c) a displacing device (9) for transferring the respective lowermost stack magazine row (12) from the stacking station (33) to a stack removing station (36) which is arranged laterally thereto and which comprises a displaceable rake (24) for taking out the container stack (15); and
d) a transfer device (6) for transferring the emptied stack magazine rows (12) from the stack removing station (36) to the stack magazine row (12), which is rearmost in the direction of displacement, in the stacking station (33).

10. Device according to claim 9, **characterised in that** each stack magazine row (12) comprises centring devices (37, 38) for centring with adjacent stack magazine rows (12).

11. Device according to claim 10, **characterised in that** the centring device consists of centring pins (37) and centring bores (38).

12. Device according to one of claims 9 to 11, **characterised in that** guide rollers (16), which co-operate with stationary guides (14), are arranged at each stack magazine row (12) for the displacement of the stack magazine rows (12) transversely to the stacking direction (A).

13. Device according to one of claims 9 to 12, **characterised in that** the displacing device (3) consists of a displaceable table (18) for receiving the lowermost stack magazine rows (12), which is mounted at a bracket (21) displaceable in stacking direction and which is constructed to be displaceable relative thereto.

14. Device according to claim 13, **characterised by** a lifting device (44), which is arranged in the stack removing station (36), for receiving the stack magazine rows (12) from the table (18).

15. Device according to one of claims 9 to 14, **characterised in that** the transfer device (18) consists of a mounting plate (29), which is displaceable perpendicularly relative to the stacking direction (A), with gripper devices, the plate being mounted and guided at a slide (27) displaceable in stacking direction (A).

16. Device according to one of claims 9 to 15, **characterised in that** it comprises a re-equipping station (30) for receiving a stack cage (2, 31) and the transfer device (6) is constructed to be displaceable to such an extent that the stack magazine rows (12, 32) can be individually removed from the stacking station (33) and can be deposited in the re-equipping station (30) and conversely.

17. Device according to claim 16, **characterised in that** a displaceable receiving plate (35) for reception of two stack cages (2, 31), which are arranged adjacent to one another, is arranged in the re-equipping station (30).

18. Device according to one of claims 9 to 15, **characterised in that** it comprises a re-equipping station (30) for receiving a stack cage (31) and the transfer device (6) is constructed to be displaceable to such an extent that the stack magazine rows (32) can be individually removed from the re-equipping station (30) and can be deposited in the stacking station (33) and that it additionally comprises an equipping station (46) with a table (45) which is displaceable in height and onto which the equipped stack magazine rows (12) are pushed by way of a transverse ejector (44).

19. Device according to one of claims 9 to 18, **characterised by** a pressing device (48) for pressing the stack magazine rows (12), which are arranged in the stacking station (33), against abutments (17).

## Revendications

1. Procédé d'empilage de récipients (10) en matière thermoplastique, obtenu par mise en forme à partir d'un film (52), découpe et transfert de l'outil de moulage (8) dans un magasin d'empilage (11) pour être extrait de celui-ci sous la forme dune pile de récipients (15) et suivre le traitement,
**caractérisé par** les étapes suivantes :
a) on utilise des rangées de magasins d'empilage (12) formées de magasins d'empilage (11) séparés, reliés les uns aux autres, et au moins l'une des rangées de magasins d'empilage (12) est prévue en supplément du nombre de rangées de récipients de l'outil de moulage (8) de la machine de moulage en amont,
b) on empile les récipients (10) dans les magasins d'empilage (11) debout dans le poste d'empilage (33),
c) on déplace en commun toutes les rangées de magasins d'empilage (12) se trouvant dans le poste d'empilage (33), perpendiculairement à la direction d'empilage (A), de la distance (B) entre deux rangées de magasins d'empilage (12),
d) on transfère la rangée de magasins d'empilage (12) la plus en avant dans la direction de translation vers un posté d'extraction de piles (36) prévu sur le côté du poste d'empilage (33),
e) on vide la rangée de magasins d'empilage (12) qui se trouve dans le poste d'extraction de piles (36),
f) on transfère la rangée de magasins d'empilage (12) qui se trouve dans le poste d'extraction de piles (36) à l'aide d'une installation de transfert (6) dans la dernière rangée de magasins d'empilage (36) du poste d'empilage (33), dans le sens de la translation.

2. Procédé selon la revendication 1,
**caractérisé en ce qu'**
on reprend les rangées de magasins d'empilage (12) dans le poste d'extraction de piles (36) à l'aide d'une installation de levage (43) et on les maintient avec celles-ci pendant l'évacuation.

3. Procédé selon l'une quelconque des revendications 1 ou 2,
**caractérisé en ce qu'**
on tourne de 180° les rangées de magasins d'empilage (12) avant de les vider.

4. Procédé selon l'une quelconque des revendications 1 à 3,
**caractérisé en ce qu'**
on pousse les rangées de magasins d'empilage (12) prévues dans le poste d'empilage (33) pendant l'empilage des récipients (10) avec une installation de compression (48) contre des butées (17).

5. Procédé selon l'une quelconque des revendications 1 à 4,
**caractérisé en ce que**
pour des rangées de magasins d'empilage (12) inclinées par rapport à la direction horizontale dans le poste d'empilage (33), on bascule ces rangées en position horizontale avant de les vider dans le poste d'extraction de piles (36) et on les rebascule en position inclinée avant de les placer sur la rangée de magasins d'empilage (12) la plus haute qui se trouve dans le poste d'empilage (33).

6. Procédé selon l'une quelconque des revendications 1 à 5,
**caractérisé en ce qu'**
après la fin de la fabrication d'un nombre déterminé de récipients (10), pour transformer l'équipement et passer à un autre format de récipients, on fait passer une à une toutes les rangées de magasins d'empilage (12) du poste d'empilage (33) dans un poste de transformation (30) ou poste d'équipement (46) et ensuite on introduit séparément dans le poste d'empilage (33), de nouvelles rangées de magasins d'empilage (33) du poste de transformation (30) et on les empile.

7. Procédé selon la revendication 6,
**caractérisé en ce qu'**
après transfert des rangées de magasins d'empilage transformées (12) dans le poste de transformation (30), on décale latéralement l'ensemble de la cage de piles obtenu et en même temps on fait passer une nouvelle cage de piles (31) avec les rangées de magasins d'empilage (32) à transformer dans le poste de transformation (30).

8. Procédé selon la revendication 6,
**caractérisé en ce que**
pendant le transfert de chaque fois la rangée de magasins de piles (12) inférieure dans le poste d'empilage (33) dans un poste d'équipement (46), on place la nouvelle rangée de magasins d'empilage (32) sur la rangée de magasins d'empilage (12, 32) supérieure du poste d'empilage (33).

9. Dispositif d'empilage de récipients (10) en matière thermoplastique en aval d'une machine de moulage comprenant des rangées de magasins d'empilage (12) avec des magasins d'empilage séparés (11) dans lesquels on empile les récipients (10), une installation pour extraire les piles de récipients (15) des magasins d'empilage (11),
**caractérisé en ce que** :
a) tous les magasins d'empilage (11) d'une rangée sont reliés pour former une rangée de magasins d'empilage (12),
b) les rangées de magasins d'empilage (12) peuvent être placées les unes sur les autres et être séparées ainsi que coulisser perpendiculairement à la direction d'empilage (A),
c) une installation de coulissement (3) déplace la rangée de magasins d'empilagc (12) chaque fois du dessous du poste d'empilage (33) dans un poste d'extraction de piles (36) situé à côté, et qui comporte un râteau coulissant (24) pour extraire la pile de récipients (15),
d) une installation de transfert (6) transfère les rangées de magasins de piles (12) vides du poste d'extraction de piles (36) sur la rangée de magasins de piles la plus à l'arrière dans la direction de translation des rangées de magasins de piles (12), dans le poste d'empilage (33).

10. Dispositif selon la revendication 9,
**caractérisé en ce que**
chaque rangée de magasins de piles (12) comporte des installations de centrage (37, 38) pour le centrage sur les rangées de magasins d'empilage (12) voisines.

11. Dispositif selon la revendication 10,
**caractérisé en ce que**
l'installation de centrage est formée de broches de centrage (37) et de perçages de centrage (38).

12. Dispositif selon l'une quelconque des revendications 9 à 11,
**caractérisé en ce que**
pour coulisser les rangées de magasins d'empilage (12) transversalement à la direction d'empilage (A) on a des galets de guidage (16) sur chaque rangée de magasins d'empilage (12) qui coopèrent avec des guides fixes (41).

13. Dispositif selon l'une quelconque des revendications 9 à 12,
**caractérisé en ce que**
l'installation de coulissement (3) se compose d'un plateau coulissant (18) recevant la rangée inférieure de magasins d'empilage (12), ce plateau étant maintenu par une console (21) coulissant dans la direction d'empilage en étant réalisé de façon coulissante par rapport à celle-ci.

14. Dispositif selon la revendication 13,
**caractérisé par**
une installation de soulèvement (44) prévue dans le poste d'extraction de piles (36) pour recevoir les rangées de magasins d'empilage (12) du plateau (18).

15. Dispositif selon l'une quelconque des revendications 9 à 14,
**caractérisé en ce que**
l'installation de transfert (6) se compose d'une plaque de fixation (29) munie d'installations de prise, coulissant perpendiculairement à la direction d'empilage (A), cette plaque étant tenue et guidée par un chariot (27) coulissant dans la direction d'empilage (A).

16. Dispositif selon l'une quelconque des revendications 9 à 15,
**caractérisé en ce qu'**
il comporte un poste de transformation (30) pour recevoir une cage de piles (2, 31) et l'installation de transfert (6) est coulissante dans la mesure où les rangées de magasins d'empilage (12, 32) peuvent être extraites séparément du poste d'empilage (33) et être déposées dans le poste de transformation (30) ou inversement.

17. Dispositif selon la revendication 16,
**caractérisé par**
un plateau de réception (35) coulissant dans le poste de transformation (30) pour recevoir deux cages d'empilage (2, 31) juxtaposées.

18. Dispositif selon l'une quelconque des revendications 9 à 15,
**caractérisé en ce qu'**
il comporte un poste de transformation (30) pour recevoir une cage de piles (31) et l'installation de transfert (6) est coulissante de façon que les rangées de magasins d'empilage (32) puissent être extraites séparément du poste de transformation (30) et être déposées dans le poste d'empilage (33), et comporte en outre un poste d'équipement (46) muni d'un plateau (45) coulissant en hauteur sur lequel on peut glisser les rangées de magasins d'empilage (12), dégarnies par une éjection transversale (44).

19. Dispositif selon l'une quelconque des revendications 9 à 18,
**caractérisé par**
une installation de compression (48) pour pousser les rangées de magasins d'empilage (12) du poste d'empilage (33) contre des butées (17).
